# EUROPÄISCHE PATENTSCHRIFT

(11) **EP 3 867 550 B1**
(45) Veröffentlichungstag und Bekanntmachung des Hinweises auf die Patenterteilung: **14.05.2025**
(21) Anmeldenummer: 19786316.0
(22) Anmeldetag: 08.10.2019
(51) Int. Cl.: F16K 15/06, F16K 27/02

(54) **VENTIL, INSBESONDERE RÜCKSCHLAGVENTIL**
VALVE, PARTICULARLY A NON-RETURN VALVE
VANNE, EN PARTICULIER CLAPET ANTIRETOUR

(30) Priorität: 18.10.2018 DE 102018008265
(43) Veröffentlichungstag der Anmeldung: 25.08.2021
(73) Patentinhaber: GEA Tuchenhagen GmbH, 21514 Büchen (DE)
(72) Erfinder: QUISPE, Enrique, 22307 Hamburg (DE)
(74) Vertreter: Hauck Patentanwaltspartnerschaft mbB
(86) Internationale Anmeldenummer: PCT/EP2019/077202
(87) Internationale Veröffentlichungsnummer: WO 2020/078772

(56) Entgegenhaltungen:
- EP-A2- 2 072 871
- DE-A1- 102005 059 318
- US-A- 2 233 649
- US-A- 2 301 276
- US-A- 2 943 639

## Beschreibung

Die Erfindung betrifft ein Ventil nach dem Oberbegriff des ersten Anspruchs.

Im Stand der Technik sind Rückschlagventile bekannt und finden vielfach Anwendung in Produktionsanlagen der Lebensmitteltechnik, Pharmazie, Feinchemie und Biotechnologie. Diese Anwendungen zeichnen sich durch hohe hygienische Anforderungen aus. Es ist ein Ziel, die Bildung von Rückständen von Produkt, Produktvorstufen oder Reinigungsmitteln innerhalb des Ventils zu vermeiden.

Eine Funktionsweise eines Rückschlagventiles ist es, in einer ersten Flussrichtung den Durchfluss zu sperren und in einer zweiten, der ersten entgegengesetzten Flussrichtung, den Durchfluss freizugeben, wenn ein Kriterium erfüllt ist. Dieses kann beispielsweise durch ein Federelement gegeben sein, welches eine Kraft auf ein Schließelement ausübt, welche Kraft als Kriterium durch das anströmende Medium überwunden werden muss.

Eine Gestaltung eines Rückschlagventils mit verringerter Ablagerung von Rückständen stellt beispielsweise die DE 10 2005 059 318 A1 vor. Dort wird vorgeschlagen, das Haltemittel, in welchem ein Schließelement des Ventils verschieblich gelagert ist, mit einem Mittel zur Vermeidung von Rückständen zu versehen. Dieses Mittel kann als eine Vertiefung zur Ableitung von Fluid ausgeführt sein, die beispielsweise am Haltemittel an einem Auflagepunkt einer Rückstellfeder angeordnet ist.

Die Skalierbarkeit eines Rückschlagventils hin zu Baugrößen mit hohem Durchsatzvermögen unter Beibehaltung der Rückstandsfreiheit wurde nicht betrachtet.

Aus EP 2 072 871 A2 ist ein Rückschlagventil bekannt mit einer zwischen einem Einlass und einem Auslass gebildeten Ventilkammer in einem Ventilgehäuse. Ein Ventilkörper ist in der Ventilkammer beweglich, so dass er wahlweise mit einem Ventilsitz in Kontakt gebracht oder von diesem abgehoben werden kann. Der Ventilsitz umfasst einen ersten Ventilsitzabschnitt und einen zweiten Ventilsitzabschnitt, mit denen ein erster Ventilkörperabschnitt bzw. ein zweiter Ventilkörperabschnitt in Kontakt gebracht werden können. Auf einer ersten Seite des Ventilkörpers ist eine erste Stange angeordnet und auf einer der ersten Seite gegenüberliegenden zweiten Seite eine zweite Stange.

Ein weiteres Rückschlagventil ist bekannt aus US 2 301 276 A. Ein Ventilkörper ist in einer durch zwei Gehäuseteile mit erstem und zweitem Anschluss gebildeten Ventilkammer axial beweglich angeordnet. Eine erste Stange ist auf einer ersten Seite des Ventilkörpers angeordnet und eine zweite Stange auf einer zweiten Seite des Ventilkörpers. Ein Ventilsitz für den Ventilkörper und eine Lagerung für die zweite Stange sind an einem zwischen dem ersten und zweiten Gehäuseteil angeordneten getrennten Bauteil vorgesehen.

Ein weiteres Ventil ist bekannt aus US 2 233 649 A mit einem Ventilkörper mit auf gegenüberliegenden Seiten angeordneten ersten und zweiten Ventilstangen, an denen Antiverschleißbuchsen aus einem widerstandsfähigen elastischen Material, zum Beispiel Gummi, abgestützt sind. Die Ventilstangen umfassen ringförmige Nuten an ihren äußeren Enden, in denen ringförmige Vorsprünge der Buchsen im montierten Zustand aufgenommen sind.

Es war daher Aufgabe der Erfindung, ein Ventil mit hohem Durchsatzvermögen zu schaffen, welches zugleich hohen hygienischen Anforderungen entspricht.

Diese Aufgabe wird gelöst durch ein Ventil mit den Merkmalen des ersten Anspruchs. Die davon abhängigen Ansprüche geben vorteilhafte Weiterbildungen der Erfindung an.

Es ist vorgesehen, dass das Ventil ein Schließelement umfasst, welches auf zwei sich gegenüberliegenden Seiten je eine Stange aufweist. Jeder Stange ist eine Lagerhülse zugeordnet, in der sie beweglich aufgenommen ist. Jede Lagerhülse ist Teil eines Gehäuseteils. Es ist eine Dichtung vorgesehen, die einen Berührungsspalt zwischen zwei direkt benachbarten Gehäuseteilen gegen einen Hohlraum im Ventil abdichtet, in welchem das Schließelement aufgenommen ist.

Das Vorhandensein wenigstens einer Dichtung und die einteilige Ausführung der Lagerhülsen an zugeordneten Gehäuseteilen sorgt für eine hygienische Ausgestaltung eines Ventils, das aufgrund zweier Lagerstellen des Schließelements große Rohrleitungsdurchmesser von 100 Millimetern erlaubt. Die Anordnung der Lagerstellen auf zwei sich gegenüberliegenden Seiten des Schließglieds bewirkt zudem eine kompakte Bauweise, die sich ebenfalls günstig auf die Vermeidung von Rückständen im Ventil auswirkt.

Diese Vorteile werden durch die Maßnahmen der abhängigen Ansprüche vertieft und mit weiteren Vorteilen ergänzt.

Es ist eine vorteilhafte Weiterbildung, wenn die Feder sich auf einem Tragelement statt auf der Lagerhülse abstützend ausgeführt ist. Dies bewirkt eine Verkleinerung des Bereiches, in welchem die Feder ein anderes Bauelement berührt, weshalb ein solcher Bereich für Ablagerungen anfällig ist.

Eine zusätzliche Verkleinerung des ablagerungsbedrohten Bereiches wird erzielt, wenn die Feder zwei an gegenüberliegenden Seiten der Feder angeordnete Enden besitzt, die jeweils auf einer von erster und zweiter gekrümmter Fläche aufsitzen.

Eine andere Weiterbildung bezieht sich auf die Begrenzung einer Öffnungsbewegung des Schließelements. Die Bildung von Ablagerungen wird verringert und die Reinigung des Ventils deutlich vereinfacht, wenn die erste Stange einen Absatz aufweist, welcher in einer Offenstellung des Ventils mit der ersten Lagerhülse in Kontakt steht, und wobei in der Offenstellung eine Stangenaußenfläche glatt in eine Lagerhülsenaußenfläche übergeht.

Die Erfindung verbessert die hygienischen Eigenschaften durch eine erste wendelförmige Nut, die an der ersten Stange ausgebildet ist, und eine zweite wendelförmige Nut, die an der zweiten Stange ausgebildet ist. Die wendelförmigen Nuten sind sich über einen in die der jeweiligen Stange zugeordneten Lagerhülse eintauchenden Teil der jeweiligen Stange erstreckend ausgeführt.

An einem Übergang der zweiten Stange in das Schließelement kann zur Verringerung von Ablagerung eine Einschnürung vorgesehen sein.

Eine nächste Weiterbildung bezieht sich auf die Ausgestaltung der Feder. Die Bildung von Ablagerungen auf der Feder wird verringert, in dem die Feder als Schraubenfeder ausgeführt ist und in jeder Stellung des Schließelement ein Abstand zwischen jeweils zwei Gängen der Schraubenfeder mindestens einer Drahtstärke der Schraubenfeder entspricht.

Besonders kompakt und mit wenigen Schnittstellen zwischen Gehäuseteilen ist das Ventil gestaltet, indem erfindungsgemäß der erste Anschluss am ersten Gehäuseteil und der zweite Anschluss am zweiten Gehäuseteil ausgebildet und erstes und zweites Gehäuseteil direkt benachbart ausgeführt sind. Die Verringerung von Schnittstellen verringert gleichzeitig verschmutzungsanfällige Stellen im Ventil.

Die vorgenannte Weiterbildung wird zusätzlich verbessert, indem die Orientierung der Gehäuseteile zueinander und damit auch der Lagerhülsen zueinander mit einer ersten Zentrierfläche am ersten Gehäuseteil und einer zweiten Zentrierfläche am zweiten Gehäuseteil bewirkt wird, wobei die Zentrierflächen den Berührungsspalt begrenzend ausgebildet sind. Die Zentrierflächen können zylindrisch um die Bewegungsachse des Schließelements oder konisch geformt sein. Dieser Aufbau erlaubt es, das Ventil auf große Durchmesser des Schließelements zu skalieren und dabei die guten Eigenschaften hinsichtlich der Reinigbarkeit und Ablagerungsresistenz zu bewahren.

Anhand eines Ausführungsbeispiels und seiner Weiterbildungen sollen die Erfindung näher erläutert und die Darstellung der Wirkungen und Vorteile vertieft werden.

Die einzige **Fig.** zeigt einen Längsschnitt durch ein Ventil in einer geöffneten Stellung.

Das Ventil **1** besitzt ein Gehäuse, welches ein erstes Gehäuseteil **2** und zweites Gehäuseteil **3** umfasst. Am ersten Gehäuseteil **2** ist ein erster Anschluss **4** vorgesehen, ein zweiter Anschluss **5** befindet sich am zweiten Gehäuseteil **3.**

Innerhalb des Ventils **1** befindet sich ein Hohlraum **6,** der eine Fluidverbindung vom ersten Anschluss **4** zum zweiten Anschluss **5** schafft.

Innerhalb des Hohlraum **6** ist ein Schließelement **7** angeordnet. Diese Schließelement **7** ist so ausgeführt und angeordnet, dass es in einer Schließstellung in dichtenden Kontakt mit einem Ventilsitz **8,** der sich am zweiten Gehäuseteil **3** befindet, bringbar ist. Dieser dichtende Kontakt bewirkt eine Trennung der Fluidverbindung zwischen erstem Anschluss **4** und zweitem Anschluss **5** und bildet eine Schließstellung des Ventils **1.**

Die Dichtwirkung wird gemäß einer Weiterbildung durch eine vorzugsweise am Schließelement **7** angeordneten Hauptdichtung **9** erhöht, wobei diese Hauptdichtung **9** in der Schließstellung in direktem, berührendem Kontakt mit dem Ventilsitz **8** steht.

Die Schließstellung des Schließelements **7** wird mit der Kraft einer gestauchten Feder **10,** vorzugsweise einer Schraubenfeder, erzeugt. Diese Kraft ist nach den Anforderungen der Anwendung des Ventils **1** bemessen und richtet sich nach dem Druck des Fluids, welches sich im zweiten Anschluss **5** befindet und eine gegen die Kraft der Feder **10** gerichtete Kraft auf das Schließelement **7** ausübt. Übersteigt die aus einem Druck des Fluids resultierende und gegen die Feder **10** gerichtete Kraft die Kraft der Feder **10,** bewegt sich das Schließelement **7** in eine Offenstellung, in der die Feder **10** stärker gestaucht ist und das Schließelement **7** vom Ventilsitz **8** abgehoben ist. Zwischen erstem Anschluss **4** und zweitem Anschluss **5** ist dann die Fluidverbindung durch den Hohlraum **6** hindurch hergestellt.

Auf einer dem ersten Anschluss **4** zugewandten Seite weist das Schließelement **7** eine erste Stange **11** auf, die von Gängen der Feder **10** umgeben ist. Die erste Stange **11** ist einteilig mit dem Schließelement **7** ausgeführt oder stoffschlüssig mit ihr verbunden. Die Verbindung ist in diesen Varianten so ausgeführt, dass keine Spalte oder vergleichbare Ansatzpunkte für Verschmutzung auftreten.

Die erste Stange **11** durchsetzt eine erste Lagerhülse **12** und ist verschieblich in dieser ersten Lagerhülse **12** geführt. Die erste Lagerhülse **12** ist am ersten Gehäuseteil **2** ausgebildet. Ein erstes Tragelement **13** ist mit der ersten Lagerhülse **12** einerseits und dem ersten Gehäuseteil **2** andererseits verbunden und vorzugsweise einteilig mit dem ersten Gehäuseteil **2** und der ersten Lagerhülse **12** ausgeführt.

Auf einer zweiten Seite des Schließelements **7,** die der ersten Seite gegenüberliegt und dem zweiten Anschluss **5** zugewandt ist, besitzt das Schließelement **7** eine zweite Stange **14.** Diese ist vorzugsweise einteilig mit dem Schließelement **7** oder stoffschlüssig mit diesem ausgeführt, um Spalte oder ähnliches als Ansatzpunkte für Anhaftung von Verunreinigung zu vermeiden.

Das zweite Gehäuseteil **3** umfasst eine zweite Lagerhülse **15,** in welcher die zweite Stange **14** verschiebbar aufgenommen ist. Ein zweites Tragelement **16** ist mit der zweiten Lagerhülse **15** einerseits und dem zweiten Gehäuseteil **3** andererseits verbunden oder vorteilhaft einteilig mit zweiter Lagerhülse **15** und zweitem Gehäuseteil **3** ausgeführt.

Erste Stange **11** und erste Lagerhülse **12** sowie zweite Stange **14** und zweite Lagerhülse **15** bilden eine zweifache Lagerung und damit auch Führung des Schließelements **7** innerhalb des Ventils **1.** Die zweifache Lagerung befindet sich zudem auf sich gegenüberliegenden Seiten des Schließelements **7.** Dies ist vorteilhaft für groß skalierte Ventile. Ein tellerförmiges Schließelement **7** kann zum Einsatz kommen. Dank der auf sich gegenüberliegenden Seiten angeordneten Lagerungen baut dieses Ventil kurz und besitzt eine sichere Funktion. Die kurze Bauweise verringert die innere Oberfläche des Ventils **1** und verringert dadurch auch die Ablagerung und Bildung von Verschmutzung.

Das Gehäuse des Ventils **1** kann aus mehreren Gehäuseteilen aufgebaut sein, von denen jeweils zwei direkt benachbart zueinander sind. Im gezeigten Beispiel umfasst das Gehäuse vorteilhaft nur erstes und zweite Gehäuseteil **2** und **3.** Dort, wo sich zwei benachbarte Gehäuseteile berühren, verbleibt immer ein Berührungsspalt **17.** Dieser wird so eng wie technisch möglich ausgeführt sein, es verbleibt jedoch die Gefahr, dass Fluid in ihn eindringt. Dieses Eindringen wird mittels einer Dichtung **18** unterbunden, die den Berührungsspalt **17** zwischen erstem und zweitem Gehäuseteil **2** und **3** abdichtet.

Die Feder **10** stützt sich einerseits am Schließelement **7** und andererseits gehäuseseitig ab. Das Ausführungsbeispiel zeigt die vorteilhafte Lösung, dass sich die Feder **10** gehäuseseitig auf dem ersten Tragelement **13** abstützt. Dieses trägt einerseits die erste Lagerhülse **12** und ist andererseits von Fluid umströmbar und/oder durchströmbar. Es erstreckt sich daher nicht über den gesamten Umfang der ersten Lagerhülse **12.** Die Feder **10** sitzt somit nicht über ihren vollständigen Umfang auf. Hierdurch wird die Anfälligkeit für Ablagerungen und Verunreinigungen erheblich verringert.

Die Widerstandsfähigkeit gegen Verschmutzung wird im Bereich der Feder **10** zusätzlich durch das folgende Ausgestaltungsmerkmal erhöht.

Eine Lagerhülsenfläche **19** der ersten Lagerhülse **12** geht in eine Oberfläche des ersten Tragelements **13** über. Gemeinsam sind sie als eine erste gekrümmte Fläche **20** ausgeformt. Auf dieser sitzt ein der ersten Lagerhülse **12** zugewandtes Ende der Feder **10** auf. Die Krümmung ist in einer Schnittebene, die eine Längsachse **L** beinhaltet, als eine stetig, stufen- und knicklos verlaufende Kurve mit zunehmendem Abstand zur Längsachse L geformt.

Eine Stangenaußenfläche **21** der ersten Stange **11** geht in eine dem ersten Anschluss **4** zugewandte Oberfläche des Schließelements **7** über und sind zusammen im Übergangsbereich als zweite gekrümmte Fläche **22** ausgeformt. Auf dieser sitzt ein dem Schließelement **7** zugewandtes Ende der Feder **10** auf. Die Krümmung ist in einer Schnittebene, die die Längsachse L beinhaltet, als eine stetig, stufen- und knicklos verlaufende Kurve mit zunehmendem Abstand zur Längsachse L geformt.

Neben dem günstigen Effekt der Widerstandsfähigkeit gegen Verschmutzung bewirken erste gekrümmte Fläche **20** und zweite gekrümmte Fläche **22** eine Zentrierung der Feder in Bezug auf Schließelement **7** und erste Lagerhülse **12.**

Die erste Stange **11** weist einen Absatz **23** auf. Dieser steht in einer Offenstellung des Ventils **1** mit der ersten Lagerhülse **12** in berührendem Kontakt. Dieser Kontakt ist derart, dass die Bewegung des Schließelements entlang der Längsachse **L** des Ventils **1** begrenzt ist. Erste Stange **11** und erste Lagerhülse **12** sind so gestaltet, dass in der Offenstellung des Ventils **1** die Stangenaußenfläche **21** glatt, insbesondere stufenlos, in die Lagerhülsenaußenfläche **19** übergeht. Dies verringert die Bildung von Anhaftungen und Ablagerungen und erhöht die Reinigbarkeit.

Die Stangen **11** und **14** sind in den Lagerhülsen **12** und **15** mit engen Spalten aufgenommen, um eine sichere Führung der Bewegung der Stangen **11** und **14** in den Lagerhülsen **12** und **15** und Ausrichtung des Schließelements **7,** insbesondere im Bezug zum Ventilsitz **8,** zu gewährleisten. Damit sich in diesen engen Spalten keine Verschmutzung bildet oder festsetzt, weisen die erste Stange **11** eine erste wendelförmige Nut **24** und die zweite Stange **14** eine zweite wendelförmige Nut **25** auf, welche Nuten **24** und **25** sich in Richtung Längsachse **L** jeweils über einen in die zugeordnete Lagerhülse **12** und **15** eintauchenden Teil der Stange **11** und **14** erstrecken.

Eine weitere Maßnahme gegen Ablagerung von Verschmutzung ist eine Einschnürung **26,** die die zweite Stange **14** an einem Übergang in das Schließelement 7 aufweist. Diese Einschnürung **26** besitzt vorzugsweise einen in einer Schnittebene betrachtet, die die Längsachse **L** beinhaltet, als Kreisabschnitt geformten Querschnitt mit einem Radius von mindestens 3 mm.

Die als Schraubenfeder ausgeführte Feder **10** ist so dimensioniert, dass in jeder Stellung des Schließelements **7** ein Abstand **A** zwischen jeweils zwei Gängen der Schraubenfeder mindestens einer Drahtstärke **D** der Schraubenfeder entspricht. Dies bewirkt eine Verringerung von Anhaftungen und Ablagerungen auf der Feder 10 und verbessert die hygienischen Eigenschaften.

Die Skalierbarkeit hin zu Baugrößen mit weitem Durchmesser der Anschlüsse **4** und **5** bei vergleichsweise kurzem Abstand der Lagerhülsen **12** und **15** in Richtung der Längsachse **L** zueinander, wird verbessert, indem am ersten Gehäuseteil **2** eine erste Zentrierfläche **27** und am zweiten Gehäuseteil **4** eine zweite Zentrierfläche **28** und erste und zweite Zentrierfläche **27** und **28** den Berührungsspalt **17** begrenzend ausgebildet sind. Die Zentrierflächen **27** und **28** bewirken eine hochgenaue Ausrichtung des zweiten Gehäuseteils **3** am erstem Gehäuseteil **2** und damit auch der Lagerhülsen **12** und **15** zueinander. Ein Klemmelement **29** fixiert die Gehäuseteile **2** und **3** per Kraftschluss. Ein vergleichsweise kurzer Abstand der Lagerhülsen **12** und **15** ist gegeben, wenn dieser Abstand etwa einem Durchmesser **W** des Schließelements **7** senkrecht zur Längsachse **L** entspricht.

Die zweite Lagerhülse **15** und das zweite Tragelement **16** sind derart im zweiten Gehäuseteil **3** angeordnet, dass im geschlossenen Zustand des Ventils **1,** wenn das Schließelement **7** und der Ventilsitz **8** in dichtendem Kontakt miteinander stehen, ein Freiraum zwischen zweiter Lagerhülse **15** und zweiten Tragelement **16** einerseits und Schließelement **7** andererseits besteht. Dieser Freiraum ist bemessen, die Reinigbarkeit zu gewährleisten und beträgt vorzugsweise mindestens 3 mm.

Die Reinigbarkeit und Widerstandsfähigkeit gegen Ablagerungen des vorgestellten Ausführungsbeispiels ist zusätzlich erhöht, indem ein jeweils der Lagerhülse **12** und **15** zugewandtes Ende der dieser Lagerhülse zugeordneten Stange **11** und **14** abgerundet ausgeführt ist, beispielsweise mit einem Radius von mehr als 4 mm.

### Bezugszeichenliste

- 1: Ventil
- 2: erstes Gehäuseteil
- 3: zweites Gehäuseteil
- 4: erster Anschluss
- 5: zweiter Anschluss
- 6: Hohlraum
- 7: Schließelement
- 8: Ventilsitz
- 9: Hauptdichtung
- 10: Feder
- 11: erste Stange
- 12: erste Lagerhülse
- 13: erstes Tragelement
- 14: zweite Stange
- 15: zweite Lagerhülse
- 16: zweites Tragelement
- 17: Berührungsspalt
- 18: Dichtung
- 19: Lagerhülsenaußenfläche
- 20: erste gekrümmte Fläche
- 21: Stangenaußenfläche
- 22: zweite gekrümmte Fläche
- 23: Absatz
- 24: erste wendelförmige Nut
- 25: zweite wendelförmige Nut
- 26: Einschnürung
- 27: erste Zentrierfläche
- 28: zweite Zentrierfläche
- 29: Klemmelement

- L: Längsachse
- A: Abstand
- D: Drahtstärke
- W: Durchmesser Schließelement

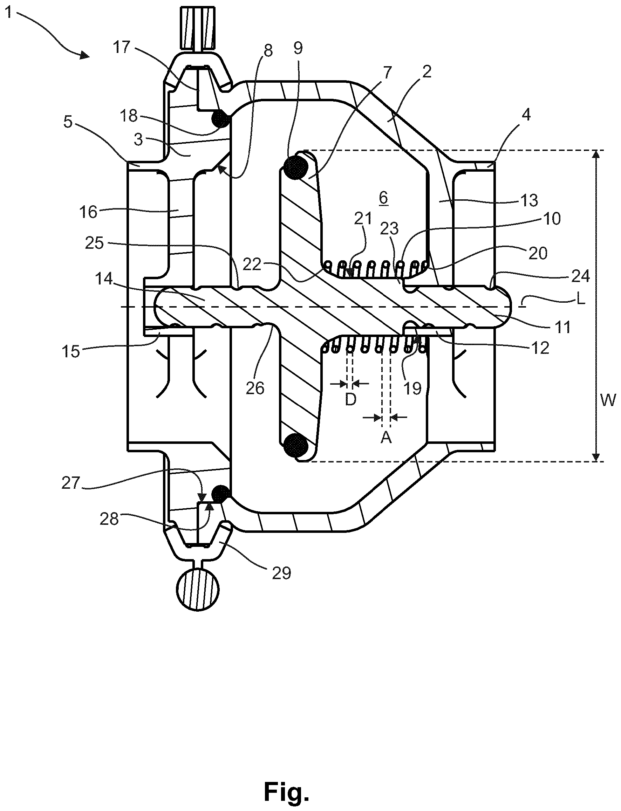

## Patentansprüche

1. Ventil (1), insbesondere Rückschlagventil, mit einem Gehäuse, einem ersten Anschluss (4), einem zweiten Anschluss (5), einem Schließelement (7), welches in einem den ersten Anschluss (4) mit dem zweiten Anschluss (5) verbindenden Hohlraum (6) angeordnet und zum Schließen des Ventils (1) mit einem Ventilsitz (8) in dichtenden Kontakt bringbar ist, und mit einer Feder (10), die angeordnet ist, zum Schließen des Ventils (1) eine Kraft auf das Schließelement (7) auszuüben, und mit einer ersten Stange (11), die auf einer ersten Seite des Schließelements (7) angeordnet und in einer ersten Lagerhülse (12) aufgenommen ist,
wobei das Schließelement eine zweite Stange (14), welche auf einer der ersten Seite gegenüberliegenden zweiten Seite des Schließelements (7) angeordnet ist, aufweist, und
die zweite Stange (14) in einer zweiten Lagerhülse (15) aufgenommen ist, und die erste Lagerhülse (12) in einem ersten Gehäuseteil (2) und die zweite Lagerhülse (15) an einem zweiten Gehäuseteil (3) ausgebildet sind, wobei der erste Anschluss (4) am ersten Gehäuseteil (2) und der zweite Anschluss (5) am zweiten Gehäuseteil (3) ausgebildet und erstes und zweites Gehäuseteil (2, 3) direkt benachbart ausgeführt sind wobei eine Dichtung (18) vorgesehen ist, die einen Berührungsspalt (17) zwischen den zwei direkt benachbarten Gehäuseteilen (2, 3) gegen den Hohlraum (6) abdichtet,
**dadurch gekennzeichnet, dass** die erste Stange (11) eine erste wendelförmige Nut (24) und die zweite Stange (14) eine zweite wendelförmige Nut (25) aufweisen, welche sich in Richtung Längsachse (L) jeweils über einen in die zugeordnete Lagerhülse (12, 15) eintauchenden Teil der Stange (11, 14) erstrecken, und dass ein jeweils der Lagerhülse (12, 15) zugewandtes Ende der dieser Lagerhülse (12, 15) zugeordneten Stange (11, 14) abgerundet ausgeführt ist.

2. Ventil nach Anspruch 1, **dadurch gekennzeichnet, dass** die Feder (10) sich auf einem ersten, die erste Lagerhülse (12) tragenden Tragelement (13) abstützend ausgeführt ist.

3. Ventil nach Anspruch 1 oder 2, **dadurch gekennzeichnet, dass** eine erste gekrümmte Fläche (20) und eine zweite gekrümmte Fläche (22) vorgesehen sind und ein der ersten Lagerhülse (12) zugeordnetes Ende der Feder (10) auf der ersten gekrümmten Fläche (20) und ein dem Schließelement (7) zugeordnetes Ende der Feder (10) auf der zweiten gekrümmte Fläche (22) aufliegen.

4. Ventil nach einem der vorhergehenden Ansprüche, **dadurch gekennzeichnet, dass** die erste Stange (11) einen Absatz (23) aufweist, welcher in einer Offenstellung des Ventils (1) mit der ersten Lagerhülse (12) in Kontakt steht, wodurch die Bewegung des Schließelements (7) entlang einer Längsachse (L) des Ventils begrenzt ist, und wobei in der Offenstellung eine Stangenaußenfläche (21) glatt in eine Lagerhülsenaußenfläche (19) übergeht.

5. Ventil nach einem der vorhergehenden Ansprüche, **dadurch gekennzeichnet, dass** die zweite Stange (14) an einem Übergang in das Schließelement (7) eine Einschnürung (26) aufweist.

6. Ventil nach einem der vorhergehenden Ansprüche, **dadurch gekennzeichnet, dass** die Feder (10) als Schraubenfeder ausgeführt ist und in jeder Stellung des Schließelements (7) ein Abstand (A) zwischen jeweils zwei Gängen der Schraubenfeder (10) mindestens einer Drahtstärke (D) der Schraubenfeder (10) entspricht.

7. Ventil nach einem der vorhergehenden Ansprüche, **dadurch gekennzeichnet, dass** am ersten Gehäuseteil (2) eine erste Zentrierfläche (27) und am zweiten Gehäuseteil (3) eine zweite Zentrierfläche (28) und erste und zweite Zentrierfläche den Berührungsspalt (17) begrenzend ausgebildet sind.

## Claims

1. A valve (1), particularly a non-return valve, having a housing, a first port (4), a second port (5), a closing element (7), which is arranged in a cavity (6) connecting the first port (4) to the second port (5), and which can be brought into sealing contact with a valve seat (8) for closing the valve (1), and having a spring (10) which is arranged to apply a force on the closing element (7) for closing the valve (1), and having a first rod (11) which is arranged on a first side of the closing element (7) and is accommodated in a first bearing bushing (12),
wherein the closing element has a second rod (14) which is arranged on a second side of the closing element (7) opposite the first side, and
the second rod (14) is accommodated in a second bearing bushing (15) and the first bearing bushing (12) is formed in a first housing part (2) and the second bearing bushing (15) is formed on a second housing part (3), wherein the first port (4) is formed on the first housing part (2) and the second port (5) is formed on the second housing part (3) and the first and second housing parts (2, 3) are designed directly adjacent to one another, wherein a seal (18), which seals off a contact gap (17) between the two directly adjacent housing parts (2, 3) relative to the cavity (6), is provided,
**characterized in that** the first rod (11) has a first spiral groove (24) and the second rod (14) has a second spiral groove (25) which extend in the direction of the longitudinal axis (L) in each case over a part of the rod (11, 14) which is immersed in the assigned bearing bushing (12, 15), and **in that** an end, which respectively faces the bearing bushing (12, 15), of the rod (11, 14), which is assigned to this bearing bushing (12, 15), is designed to be rounded.

2. The valve according to claim 1, **characterized in that** the spring (10) is designed to be supported on a first support element (13) supporting the first bearing bushing (12).

3. The valve according to claim 1 or 2, **characterized in that** a first curved surface (20) and a second curved surface (22) are provided and an end of the spring (10) which is assigned to the first bearing bushing (12) is positioned on the first curved surface (20) and an end of the spring (10) which is assigned to the closing element (7) is positioned on the second curved surface (22).

4. The valve according to one of the preceding claims, **characterized in that** the first rod (11) has a shoulder (23) which is in contact with the first bearing bushing (12) in an open position of the valve (1), whereby the movement of the closing element (7) is defined along a longitudinal axis (L) of the valve, and wherein in the open position a rod outer surface (21) transitions smoothly into a bearing bushing outer surface (19).

5. The valve according to one of the preceding claims, **characterized in that** the second rod (14) has a constriction (26) at a transition into the closing element (7).

6. The valve according to one of the preceding claims, **characterized in that** the spring (10) is designed as a helical spring and in each position of the closing element (7) a spacing (A) between two respective turns of the helical spring (10) corresponds at least to a wire thickness (D) of the helical spring (10).

7. The valve according to one of the preceding claims, **characterized in that** a first centering surface (27) is formed on the first housing part (2) and a second centering surface (28) is formed on the second housing part (3) and the first and second centering surfaces are formed so as to define the contact gap (17).

## Revendications

1. Vanne (1), en particulier clapet antiretour, comprenant un boîtier, un premier raccord (4), un deuxième raccord (5), un élément de fermeture (7), lequel est disposé dans un espace creux (6) reliant le premier raccord (4) au deuxième raccord (5) et peut être mis en contact étanche avec un siège de vanne (8) pour fermer la vanne (1), et comprenant un ressort (10) disposé de manière à exercer une force sur le siège de vanne (7) pour fermer la vanne (1), et comprenant une première tige (11) disposée sur un premier côté de l'élément de fermeture (7) et reçue dans une première douille de palier (12),
dans laquelle l'élément de fermeture présente une deuxième tige (14) disposée sur un deuxième côté de l'élément de fermeture (7) opposé au premier côté, et
la deuxième tige (14) est reçue dans une deuxième douille de palier (15), et
la première douille de palier (12) est formée dans une première partie de boîtier (2) et la deuxième douille de palier (15) est formée sur une deuxième partie de boîtier (3), dans laquelle le premier raccord (4) est formé sur la première partie de boîtier (2) et le deuxième raccord (5) est formé sur la deuxième partie de boîtier (3) et les première et deuxième parties de boîtier (2, 3) sont immédiatement adjacente, dans laquelle il est prévu un moyen d'étanchéité (18) assurant l'étanchéité d'une fente de contact (17) entre les deux parties de boîtier (2, 3) immédiatement adjacentes par rapport à l'espace creux (6),
**caractérisée en ce que** la première tige (14) présente une première rainure hélicoïdale (24) et la deuxième tige (14) présente une deuxième rainure hélicoïdale (25), lesquelles s'étendent en direction de l'axe longitudinal (L) respectivement sur une partie de la tige (11, 14) s'introduisant dans la douille de palier (12, 15) correspondante, et **en ce qu'**une extrémité de la tige (11, 14) correspondant à cette douille de palier (12, 15), tournée respectivement vers la douille de palier (12, 15), est conçue de façon arrondie.

2. Vanne selon la revendication 1, **caractérisée en ce que** le ressort (10) est conçu de façon à s'appuyer sur un premier élément de support (13) supportant la première douille de palier (12).

3. Vanne selon la revendication 1 ou 2, **caractérisée en ce qu'**il est prévu une première surface incurvée (20) et une deuxième surface incurvée (22) et une extrémité du ressort (10) correspondant à la première douille de palier (12) s'applique sur la première surface incurvée (20) et une extrémité du ressort (10) correspondant à l'élément de fermeture (7) s'applique sur la deuxième surface incurvée (22).

4. Vanne selon l'une des revendications précédentes, **caractérisée en ce que** la première tige (11) présente un talon (23), lequel est en contact avec la première douille de palier (12) dans une position ouverte de la vanne (1), moyennant quoi le déplacement de l'élément de fermeture (7) le long d'un axe longitudinal (L) de la vanne est limité, et dans laquelle une surface extérieure de tige (21) se raccorde de façon lisse à une surface extérieure de douille de palier (19) dans la position ouverte.

5. Vanne selon l'une des revendications précédentes, **caractérisée en ce que** la deuxième tige (14) présente un rétrécissement (26) au niveau d'une transition vers l'élément de fermeture (7).

6. Vanne selon l'une des revendications précédentes, **caractérisée en ce que** le ressort (10) est conçu comme un ressort à boudin et un espace (A) entre respectivement deux pas du ressort à boudin (10) correspond au moins à une épaisseur de fil (D) du ressort à boudin (10) dans chaque position de l'élément de fermeture (7).

7. Vanne selon l'une des revendications précédentes, **caractérisée en ce qu'**une première surface de centrage (27) est formée sur la première partie de boîtier (2) et une deuxième surface de centrage (28) est formée sur la deuxième partie de boîtier (3) et les première et deuxième surfaces de centrage sont formées de manière à limiter la fente de contact (17).
